# EUROPEAN PATENT SPECIFICATION

(11) **EP 3 550 838 B1**
(45) Date of publication and mention of the grant of the patent: **28.10.2020**
(21) Application number: 19156790.8
(22) Date of filing: 25.03.2013
(51) Int. Cl.: H04N 19/164, H04N 19/89, H04N 19/105, H04N 19/46, H04N 19/61, H04N 19/107, H04N 21/6377, H04N 21/6583

(54) **RESILIENT SIGNAL ENCODING**
ROBUSTE SIGNALCODIERUNG
CODAGE DE SIGNAL ROBUSTE

(43) Date of publication of application: 09.10.2019
(62) Divisional of application: 13160824.2
(73) Proprietor: BlackBerry Limited, Waterloo, Ontario N2K 0A7 (CA)
(72) Inventor: MONTMINY, Christian Joseph, Kanata, Ontario K2K 0B3 (CA); MARTIN-COCHER, Gaelle Christine, Mississauga, Ontario L4W 0B5 (CA); HE, Dake, Waterloo, Ontario N2V 2X2 (CA)
(74) Representative: Hanna Moore + Curley

(56) References cited:
- EP-A2- 0 763 944
- TOSHIHISA NAKAI ET AL: "Error Resilient Video Coding using Backward Channel Signaling", 38. MPEG MEETING; 17-02-1997 - 21-02-1997; SEVILLA; (MOTION PICTUREEXPERT GROUP OR ISO/IEC JTC1/SC29/WG11),, no. M1718, 11 February 1997 (1997-02-11), XP030031010, ISSN: 0000-0326
- HONGYUAN CHEN ET AL: "Adaptive Dly-Ack for TCP over 802.15.3 WPAN", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA, vol. 3, 29 November 2004 (2004-11-29), pages 1686-1690, XP010757808, DOI: 10.1109/GLOCOM.2004.1378268 ISBN: 978-0-7803-8794-2

## Description

### 1. Technical Field

The present disclosure relates to the field of encoding digital signals to reduce bandwidth utilization. In particular, to a system and method for resilient signal encoding.

### 2. Related Art

A digital signal that is composed of successive frames of information (a.k.a. data) may be encoded using various mechanisms in order to reduce the bandwidth required to transmit the signal. One such mechanism is inter-frame encoding where in some frames may be encoded as independently decodable frames (a.k.a. i-frames) while the remaining frames each may be encoded relative to an independently decodable frame as difference frames (p-frames) or relative to another p-frame. The mechanism is susceptible to some p-frames becoming undecodable when the frame relative to which they were encoded is lost or corrupted in transmission. Some mechanisms (e.g. Internet Engineering Task Force (IETF) Extended RTP Profile for Real-time Transport Control Protocol (RTCP)-Based Feedback (RTP/AVPF) RFC 4585) are used whereby a receiver of the encoded frames may inform the encoder of the frames when some received frames are undecodable.

Typically a trade-off is made between resilience to frame loss or corruption and a degree of bandwidth utilization (i.e. compression) in either or both of a downlink channel and an uplink channel.

Examples of prior art in this respect include:
European patent application EP0763944 A2 (OKI ELECTRIC IND CO LTD [JP]) 19 March 1997 which presents a video transmission system in which a positive or negative acknowledgement is transmitted for every frame and in which received frames are assigned as reference frames based on these acknowledgements.

TOSHIHISA NAKAI ET AL: "Error Resilient Video Coding using Backward Channel Signaling", 38. MPEG MEETING; 17-02-1997 - 21-02-1997 ; SEVILLA; (MOTION PICTUREEXPERT GROUP OR ISO/IEC JTC1/SC29/WG11), no. M1718, 11 February 1997 (1997-02-11), ISSN: 0000-0326 which discloses error resilient video coding using a backward channel signaling in which an encoder replaces the referenced frame with an acknowledged frame when a non-acknowledged signal is received.

HONGYUAN CHEN ET AL: "Adaptive Dly-Ack for TCP over 802.15.3 WPAN", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA, vol. 3, 29 November 2004 (2004-11-29), pages 1686-1690, DOI: 10.1109/GLOCOM.2004.1378268 ISBN: 978-0-7803-8794-2 which discloses a delayed ACK (Dly-ACK) scheme in which a whole burst of data frames is first received, and then the whole burst is acknowledged by one ACK frame

### Summary

The present invention provides a method as detailed in claim 1. Also provided is a system according to claim 12 and a computer-readable storage medium according to claim 13. Advantageous features are provided in the dependent claims.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.
Fig. 1 is a schematic representation of a time series of encoded frames of a digital signal.
Fig. 2 is a schematic representation of a method for resilient signal encoding.
Fig. 3 is a schematic representation of system for resilient signal encoding.

### DETAILED DESCRIPTION

A system and method for resilient signal encoding is described herein. The system and method provide for encoding a digital signal to reduce bandwidth required to transmit the encoded signal while mitigating the impact of frames lost or corrupted during transmission. The system and method may be used in applications such as, for example, video conferencing, telepresence, streaming media, video editing and other similar applications.

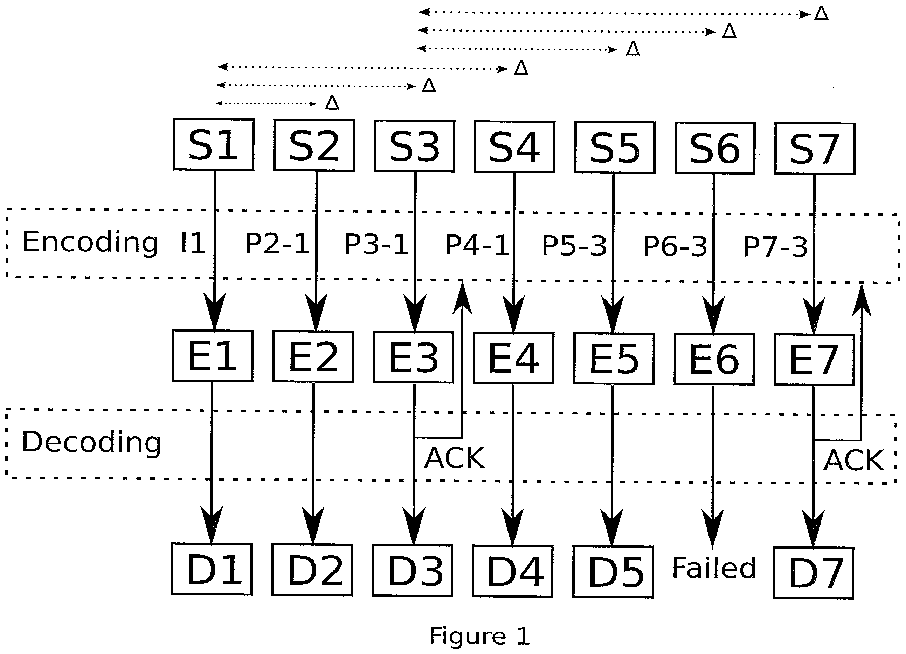

Figure 1 is a schematic representation of a time series of encoded frames of an encoded signal. The encoded signal is derived from an input signal in accordance with the system and method for resilient signal encoding. The input signal may be a digital signal that comprises a sequence of data samples (e.g. frames) that represent, for example, a video stream or other similar content. For illustrative purposes the input signal describes herein represents a video stream comprising a sequence of video frames S1-S7 but the illustration is not intended to be limiting in any way. In Figure 1 time is represented in the horizontal axis progressing from left (earlier time) to right (later time).

A first frame of the input signal S1 may be encoded as an independently decodable frame (II) and placed in the encoded signal as encoded frame E1. The independently decodable frame E1 may be transmitted to a receiver for decoding. The receiver may decode the independently decodable frame without reference to any other frames in the encoded signal as decoded frame D1. A subsequent frame of the input signal S2 may be encoded as a difference frame (P2-1) that represents a content difference between the first frame S1 and the subsequent frame S2. The first frame acts as a reference frame for the encoding of the subsequent frame. The difference frame E2 may be transmitted to the receiver for decoding. The receiver may decode the difference frame E2 by referencing the independently decodable frame E1. The independently decodable frame E1, which corresponds to the first frame S1, acts as a reference frame for the decoding of the difference frame E2. Further frames of the input signal S3 and S4 may be encoded as difference frames E3 and E4 in a manner similar to that described above with reference to the subsequent frame S2.

When the receiver successfully decodes a difference frame, the receiver may send an acknowledgement (ACK) indicating that the difference frame was successfully decoded. In response to receiving the acknowledgement (ACK), the frame associated with acknowledgement S3 may be assigned as the reference frame and further subsequent frames of the input signal S5, S6 and S7 may be encoded as difference frames E5, E6 and E7 that represent a content difference between the frame S5, S6 and S7 and the reference frame S3. The receiver may send an acknowledgement for each difference frame that is successfully decoded. Alternatively the receiver may only send an acknowledgement for difference frames that are marked as acknowledgement-requested and that have been successfully decoded. During encoding some difference frames such as, for example, every N^{th} frame may be marked as acknowledgement-requested before they are transmitted. Difference frames that are marked as acknowledgement-requested may be candidate reference frames. The interval N for marking candidate reference frames may be a number between 2 and a predetermined upper limit (e.g. 3000) that may be preconfigured or may be user specified. In a further alternative, a difference frame may be marked as acknowledgement-requested (e.g. a candidate reference frame) based on the content of the frame and/or one or more frames occurring before or after the frame, for example, to minimize the difference between the reference frame and subsequently encoded frames. In another alternative, frames designated as golden frames (e.g. as specified in Internet Engineering Task Force (IETF) RFC 6386, VP8 Data Format and Decoding Guide) may be marked as acknowledgement-requested. In the example illustrated in Figure 1, encoded frame E3 was successfully decoded and an acknowledgement was sent. Subsequently, frames S5, S6 and S7 are encoded as difference frames E5, E6 and E7 relative to S3 that corresponds to frame E3 associated with the sent acknowledgement.

Alternatively, or in addition, the receiver may send an acknowledgement whether or not a difference frame was successfully decoded. The acknowledgement may include a binary variable, flag or other similar indicator that has one value or state to signify successful decoding and another value or state to signify a failure to successfully decode the difference frame. The acknowledgement may further include one or more indicators of the outcomes (e.g. success or failure) of decoding earlier frames. For example, the acknowledgement may also include indicators of the outcomes of decoding of K previous frames. The number of previous frames K may be a number (e.g. 7, 15, 23 or 31) that may be preconfigured or may be user specified. The acknowledgement may take the form of a binary bit mask in which a first bit represents the outcome of decoding a current frame and K further bits represent the outcome of decoding K previous frames. In a further alternative, the indicator of the outcome of decoding each frames may assigned to a class where the class specifies the number of times (e.g. 32, 16, 8 or 0) that the indicator will be repeated (e.g. included in an acknowledgement). The inclusion of an indicator of the outcome of decoding previous frames may be limited to previous frames that are candidate reference frames (e.g. frames that are mark acknowledgement-requested). The redundant inclusion of indicators of the outcome of decoding one or more previous frames in the acknowledgement allows the system and method to be resilient when one or more acknowledgements are lost during transmission. An indicator that fails to be returned a first lost acknowledgement may be successfully returned in a subsequent acknowledgement.

A failure to successfully decode frame E6 is shown resulting in no acknowledgement being sent for E6. Encoded frame E7 is successfully decoded despite the failure to decode E6 because E3 was successfully decoded to D3 and E7 was encoded relative to S3. Due to the failure to decode E6, no acknowledgement was sent but the system and method may receive an acknowledgement of the successful decoding of E7 instead. Difference frame E7 may, for example, be marked as acknowledgement-requested when no acknowledgement is received for E6. Subsequently encoded frames may be encoded relative to S7. Alternatively, when no acknowledgement is received for E6 subsequent frames may continue to be encoded relative to the current reference frame S3 until an acknowledgement is received for a subsequent candidate reference frame, for example the next N^{th} frame.

In the illustrated example of Figure 1, S4 is encoded relative to S1 even though acknowledgement was sent for E3. After an acknowledge is sent, encoding of subsequent frames may continue to use a previous reference frame for some time due to various factors including propagation delay, caching, pipelining and other similar latency related factors.

Alternatively, or in addition, encoding may operate in one of two possible modes: normal mode and safe mode. Selection of one of the two modes may be responsive to feedback from the receiver (e.g. acknowledgements received). In safe mode encoding only uses as a reference frame a frame for which an acknowledgement, including a positive indication of successfully decoding, has been received. In normal mode encoding may use as a reference frame any frame including a frame for which no acknowledgement including a positive indication of successfully decoding has been received. Encoding may switch from normal mode to safe mode when, for example, an acknowledgement is received that includes an indicator of unsuccessful decoding of a frame. Encoding may switch from safe mode to normal mode when an abatement criterion is met. The abatement criterion may include, for example, when a positive indication of successfully decoding has been received for L success frames, where L is a number that may be preconfigured or may be user specified. Alternatively, the abatement criterion may specify a minimum time duration during which encoding remains in safe mode to mitigate frequent switching between safe and normal mode. Encoding may be configured to start either in normal mode or safe mode.

The independently decodable frame and each of the difference frames is uniquely identifiable using, for example, sequence numbers that may be included in the encoded frames. Each difference frame may also include identification of the reference frame from which it was encoded and that may be used to decode the difference frame. Each acknowledgement sent by the receiver may identify the frame that was successfully decoded using, for example, the sequence number of the frame.

The system and method may encode and transmit only a single independently decodable frame thereby mitigating the bandwidth required to transmit the encoded signal. Further independently decodable frames may be encoded and transmitted at any time responsive to input such as, for example, a force reset request or detection of the loss or failure to decode a previous independently decodable frame. When the receiver successfully decodes an independently decodable frame, the receiver may send an acknowledgement (ACK) indicating that the independently decodable frame was successfully decoded. In the absence of receiving an acknowledgement, a further independently decodable frame may be encoded and transmitted to the receiver.

The system and method for resilient signal encoding may use various forms of inter-frame compression either lossy or lossless. The inter-frame compression may be used in combination with other compression techniques (e.g. predictive encoding). The system and method for resilient signal encoding may use encoding formats such as, for example, International Telecommunication Union - Telecommunication Standardization Sector (ITU-T) Advanced Video Coding For Generic Audiovisual Services (AVC)/H.264 or High Efficiency Video Coding (HEVC)/H.265 including scalable and multiview extensions of these formats such as scalable video coding (SVC), multiview video coding (MVC), 3-dimensional coding (3D), and The WebM Project VP8 or VP9 coding.

The acknowledgements may be received using in-band signaling in accordance with a video codec syntax being used for the encoded frames (e.g. H.264), as part of an ITU-T Supplementary Enhancement Information (SEI) message, or using a user data extension mechanism. Alternatively or in addition, the acknowledgements may be sent out-of-band using mechanisms such as, for example, as part of an IETF Session Initiation Protocol (SIP) message, as part of a Moving Picture Expert Group (MPEG) green MPEG set of metadata dedicated to resource saving, as part of an IETF Real Time Communication Web (RTCWeb) mechanism, as part of an IETF codec control message or as part of an IETF Audio-Visual Profile with Feedback (AVPF) message.

The acknowledgement-requested marking of a frame may be sent as a flag or as a syntax element using in-band signaling in accordance with a video codec syntax being used for the encoded frames (e.g. H.264), as part of an ITU-T SEI message or using a user data extension mechanism. Alternatively, or in addition, the acknowledgement-requested marking of a frame my be sent out-of-band using mechanisms such as, for example, as part of a MPEG green MPEG set of metadata dedicated to resource saving, as part of an IETF RTCWeb mechanism or as part of an IETF SIP message.

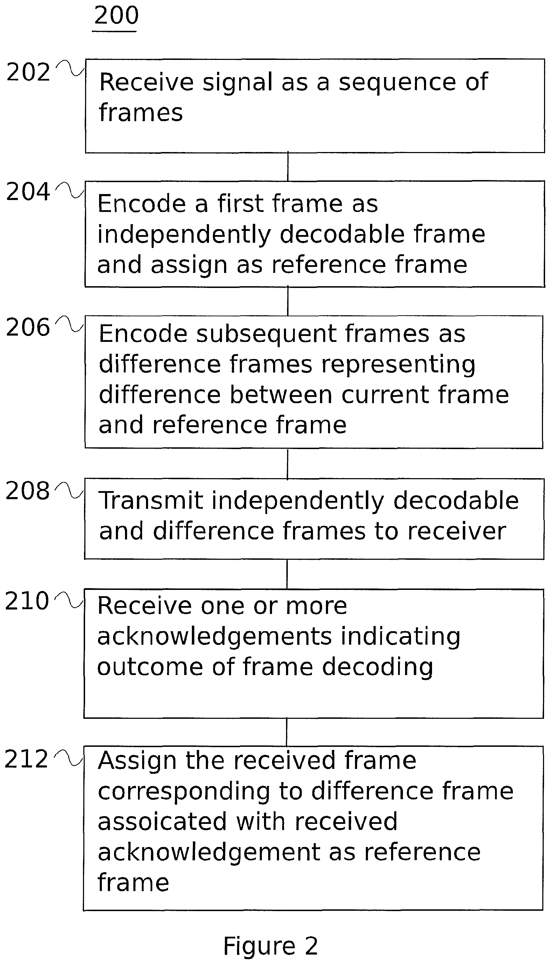

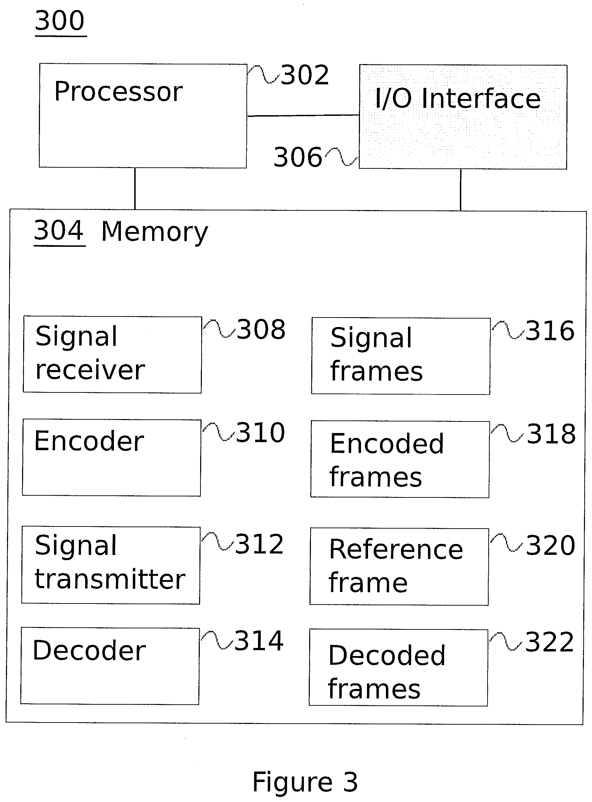

Fig. 2 is a representation of a method for resilient signal encoding. The method 200 may, for example, be implemented using the system 300 described herein with reference to Figure 3. The method 200 includes the following acts. Receiving a signal as a sequence of frames 202. Encoding a first frame, of the received frames, as an independently decodable frame (a.k.a. an i-frame) and assigning or designating the first frame as a reference frame 204. Encoding subsequent frames, of the received signal, as difference frames (a.k.a. p-frames) representing a difference between a current frame, of the subsequent frames, and the reference frame 206. Transmitting the independently decodable frame and the difference frames, as they are encoded, to a receiver 208. Receiving one or more acknowledgements (a.k.a. ACK) each indicating the outcome of frame decoding 210. An acknowledgement may be sent by the receiver when an independently decodable frame or a difference frame has been successfully decoded. An acknowledgement may be sent by the receiver when a golden frame has been successfully decoded. The receiver may only send an acknowledgement for difference frames that are marked as acknowledgement-requested. The acknowledgement may further include one or more indicators of the outcomes (e.g. success or failure) of decoding earlier frames. For example, the acknowledgement may also include indicators of the outcomes of decoding of K previous frames. Assigning or designating the received frame corresponding to a difference frame associated with a received acknowledgement as the reference frame 212. Subsequently encoded difference frames as described in act 206 may represent a difference between the current frame and the newly assigned reference frame. In an alternative embodiment, the method may further include switching between a safe mode according to act 212 described above and a normal mode where encoding may use as a reference frame any frame including a frame for which no acknowledgement including a positive indication of successfully decoding has been received.

Figure 3 is a schematic representation of a system for resilient signal encoding 300. The system 300 comprises a processor 302, memory 304 (the contents of which are accessible by the processor 302) and an I/O interface 306. The memory 304 may store instructions which when executed using the process 302 may cause the system 300 to render the functionality associated with a signal receiver 308, an encoder 310, a signal transmitter 312 and a decoder 314. Alternatively, or in addition, the instructions when executed using the process 302 may configure the system 300 to implement the acts of method 200. In addition the memory 304 may store information in data structures including, for example, signal frames 316, encoded frames 318, reference frame 320, decoded frames 322 and golden frames.

The processor 302 may comprise a single processor or multiple processors that may be disposed on a single chip, on multiple devices or distributed over more that one system. The processor 302 may be hardware that executes computer executable instructions or computer code embodied in the memory 304 or in other memory to perform one or more features of the system. The processor 302 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 304 may comprise a device for storing and retrieving data, processor executable instructions, or any combination thereof. The memory 304 may include non-volatile and/or volatile memory, such as a random access memory (RAM), a read-only memory (ROM), an erasable programmable read-only memory (EPROM), or a flash memory. The memory 304 may comprise a single device or multiple devices that may be disposed on one or more dedicated memory devices or on a processor or other similar device. Alternatively or in addition, the memory 304 may include an optical, magnetic (hard-drive) or any other form of data storage device.

The memory 304 may store computer code, such as signal receiver 308, encoder 310, signal transmitter 312 and decoder 314 as described herein. The computer code may include instructions executable with the processor 302. The computer code may be written in any computer language, such as C, C++, assembly language, channel program code, and/or any combination of computer languages. The signal receiver 308 may receive a signal as a sequence of frames. The encoder 310 may encode a first frame, of the received frames, as an independently decodable frame and assign the first frame as a reference frame. The encoder 310 may encode subsequent frames, of the received signal, as difference frames representing a difference between a current frame, of the subsequent frames, and the reference frame. The signal transmitter 312 may transmit the independently decodable frame and the difference frames, as they are encoded, to a receiver. The signal receiver 308 may also receive acknowledgements associated with successfully decoded frames. When an acknowledgement is received, the received frame corresponding to the difference frame associated with a received acknowledgement may be assigned as the reference frame. Subsequently encoded frames of the received frames may be encoded relative to the newly assigned reference frame by the encoder 310. The system 300 may not include the decoder 314 when an encoded signal is only transmitted to the receiver (e.g. in one-way transmission). When encoded signals are transmitted to the receiver and also received by the system (e.g. in two-way transmission) the system 300 may include the decoder 314. The decoder 314 decodes the received encoded frames and when a frame is successfully decoded, the decoder 314 may send an acknowledgement to the transmitter of the encoded frames. The receiver may only send an acknowledgement for difference frames that are marked as acknowledgement-requested.

The I/O interface 306 may be used to connect devices such as, for example, data transmission media and other components of the system 300.

All of the disclosure, regardless of the particular implementation described, is exemplary in nature, rather than limiting. The system 300 may include more, fewer, or different components than illustrated in Figure 3. Furthermore, each one of the components of system 300 may include more, fewer, or different elements than is illustrated in Figure 3. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for resilient signal encoding have been described, it will be apparent to those of ordinary skill in the art that many more embodiments and implementations are possible. The present invention is defined by the accompanying claims.

## Claims

1. A method (200) of encoding a signal comprising:
receiving (202), over time, a sequence of input frames that comprise the signal;
encoding (204) a first frame of the sequence of input frames as an independently decodable frame and assigning the first frame as a current reference frame;
encoding (206) subsequently received input frames, in the sequence of input frames, each as a difference frame that represents a difference between the input frame and the current reference frame;
transmitting (208) the independently decodable frame and each of the difference frames, after each is encoded, to a receiver;
receiving (210) one or more acknowledgements from the receiver;
switching to a safe operating mode when one or more acknowledgements indicate that one of the independently decodable frame or the difference frames was unsuccessfully decoded, and, when in the safe operating mode, assigning (212) an input frame corresponding to a difference frame associated with a received acknowledgment, of the one or more acknowledgements, that includes a positive indication of successful decoding of said input frame as the current reference frame; and
switching to a normal operating mode when an abatement criterion is met, and, when in the normal mode, assigning (212) an input frame as the current reference frame regardless of receiving an acknowledgement associated with a difference frame corresponding to the input frame;
wherein the one or more acknowledgements are received through an in-band or an out-of-band signaling.

2. The method (200) of encoding a signal of claim 1, where the signal includes a video stream.

3. The method (200) for encoding a signal of claim 1, where the receiver decodes each difference frame using a frame previously decoded by the receiver that corresponds to the current reference frame from which the difference frame was derived without referencing any intervening frames in the sequence of frames between the current reference frame and the difference frame.

4. The method (200) for encoding a signal of claim 1, where each of the one or more acknowledgements is associated with one or more difference frames that are each marked as an acknowledgement-requested.

5. The method (200) for encoding a signal of claim 4, where each N difference frame is marked as the acknowledgement-requested before being transmitted and where N is a predetermined value.

6. The method (200) for encoding a signal of claim 4, where the acknowledgement-requested mark for each of the one or more difference frames is sent in-band using mechanisms including any of: in accordance with a video codec syntax being used for the encoding the input frames, in accordance with an ITU-T Supplementary Enhancement Information (SEI) message, and using a user data extension mechanism.

7. The method (200) for encoding a signal of claim 4, where the acknowledgement-requested mark for each of the one or more difference frames is sent out-of-band using mechanisms including any of: a Moving Picture Expert Group (MPEG) green MPEG set of metadata, an IETF RTCweb mechanism and an IETF Session Initiation Protocol (SIP) message.

8. The method (200) for encoding a signal of claim 1, where the independently decodable frame and each difference frame are encoded in accordance with an ITU-T Video Coding Experts Group H.264 standard.

9. The method (200) for encoding a signal of claim 1, where the one or more acknowledgements are received in-band using mechanisms in accordance with: a video codec syntax, a ITU-T Supplementary Enhancement Information (SEI) message, or a user data extension mechanism.

10. The method (200) for encoding a signal of claim 1, where the one or more acknowledgements are received out-of-band using mechanisms including any of: an IETF RTCweb mechanism, an IETF codec control message, an IETF AVPF message, a Moving Picture Expert Group (MPEG) green MPEG set of metadata, IETF codec control message and a IETF Session Initiation Protocol (SIP) message.

11. The method (200) for encoding a signal of claim 1, where the abatement criterion includes any of:
receiving a positive indication of successful decoding of a predetermined number of successive difference frames; and a minimum time duration of operation in safe mode.

12. A system (300) for encoding a signal comprising:
one or more processors (302); and
memory (304) containing instructions which, when executed by the one or more processors, cause the one or more processors to carry out the method of any of claims 1 to 11.

13. A computer-readable storage medium having computer-executable instructions stored thereon that, when executed by a computer, cause the computer to implement the method of any one of claims 1 to 11.

## Patentansprüche

1. Verfahren (200) zum Codieren eines Signals, Folgendes umfassend:
Empfangen (202), im Laufe der Zeit, einer Sequenz von Eingabe-Frames, die das Signal umfassen;
Codieren (204) eines ersten Frames der Sequenz von Eingabe-Frames als einen unabhängig decodierbaren Frame und Zuweisen des ersten Frames als einen aktuellen Bezugs-Frame;
Codieren (206) anschließend empfangener Eingabe-Frames, in der Sequenz von Eingabe-Frames, jeweils als einen Differenz-Frame, der eine Differenz zwischen dem Eingabe-Frame und dem aktuellen Bezugs-Frame darstellt;
Übertragen (208) des unabhängig decodierbaren Frames und jedes der Differenz-Frames, nachdem jeder codiert wurde, an einen Empfänger;
Empfangen (210) einer oder mehrerer Quittungen vom Empfänger;
Umschalten in einen sicheren Betriebsmodus, wenn eine oder mehrere Quittungen anzeigen, dass einer der unabhängig decodierbaren Frames oder der Differenz-Frames erfolglos decodiert wurde, und, wenn im sicheren Betriebsmodus, Zuweisen (212) eines Eingabe-Frames, der einem Differenz-Frame entspricht, der einer empfangenen Quittung der einen oder der mehreren Quittungen zugeordnet ist, die eine positive Anzeige eines erfolgreichen Decodierens des Eingabe-Frames als den aktuellen Bezugs-Frame beinhaltet; und
Umschalten in einen normalen Betriebsmodus, wenn ein Minderungskriterium erfüllt ist, und, wenn im normalen Modus, Zuweisen (212) eines Eingabe-Frames als den aktuellen Bezugs-Frame, unabhängig vom Empfangen einer Quittung, die einem Differenz-Frame zugeordnet ist, der dem Eingabe-Frame entspricht;
wobei die eine oder die mehreren Quittungen durch Inband- oder Außerbandsignalisierung empfangen werden.

2. Verfahren (200) zum Codieren eines Signals nach Anspruch 1, wobei das Signal einen Video-Stream beinhaltet.

3. Verfahren (200) zum Codieren eines Signals nach Anspruch 1, wobei der Empfänger jeden Differenz-Frame unter Verwendung eines zuvor durch den Empfänger decodierten Frames decodiert, der dem aktuellen Bezugs-Frame entspricht, von dem der Differenz-Frame abgeleitet wurde, ohne sich auf beliebige dazwischenliegende Frames in der Sequenz von Frames zwischen dem aktuellen Bezugs-Frame und dem Differenz-Frame zu beziehen.

4. Verfahren (200) zum Codieren eines Signals nach Anspruch 1, wobei jede der einen oder der mehreren Quittungen einem oder mehreren Differenz-Frames zugeordnet ist, die jeweils als eine angeforderte Quittung markiert sind.

5. Verfahren (200) zum Codieren eines Signals nach Anspruch 4, wobei jeder N Differenz-Frame vor dem Übertragen als die angeforderte Quittung markiert wird und wobei N ein vorbestimmter Wert ist.

6. Verfahren (200) zum Codieren eines Signals nach Anspruch 4, wobei die Markierung der angeforderten Quittung für jeden des einen oder der mehreren Differenz-Frames mittels Inband gesendet wird, unter Verwendung von Mechanismen, die beliebige der Folgenden beinhalten: gemäß einer Videocodec-Syntax, die für das Codieren der Eingabe-Frames verwendet wird, gemäß einer ITU-T Supplementary Enhancement Information(SEI)-Nachricht und unter Verwendung eines Benutzerdaten-Erweiterungsmechanismus.

7. Verfahren (200) zum Codieren eines Signals nach Anspruch 4, wobei die Markierung der angeforderten Quittung für jeden des einen oder der mehreren Differenz-Frames mittels Außerband gesendet wird, unter Verwendung von Mechanismen, die beliebige der Folgenden beinhalten: einen grünen MPEG-Metadatensatz der Moving Picture Expert Group (MPEG), einen IETF RTCweb-Mechanismus und eine IETF-Session Initiation Protocol(SIP)-Nachricht.

8. Verfahren (200) zum Codieren eines Signals nach Anspruch 1, wobei der unabhängig decodierbare Frame und jeder Differenz-Frame gemäß einem ITU-T-Standard H.264 der Video Coding Experts Group codiert werden.

9. Verfahren (200) zum Codieren eines Signals nach Anspruch 1, wobei die eine oder die mehreren Quittungen mittels Inband empfangen werden, unter Verwendung von Mechanismen gemäß: einer Videocodec-Syntax, einer ITU-T Supplementary Enhancement Information(SEI)-Nachricht oder einem Benutzerdaten-Erweiterungsmechanismus.

10. Verfahren (200) zum Codieren eines Signals nach Anspruch 1, wobei die eine oder die mehreren Quittungen mittels Außerband empfangen werden, unter Verwendung von Mechanismen, die beliebige der Folgenden beinhalten: einen IETF-RTCweb-Mechanismus, eine IETF-Codec-Kontrollnachricht, eine IETF-AVPF-Nachricht, einen grünen MPEG-Metadatensatz (MPEG) der Moving Picture Expert Group (MPEG), eine IETF-Codec-Kontrollnachricht und eine IETF-Session Initiation Protocol(SIP)-Nachricht.

11. Verfahren (200) zum Codieren eines Signals nach Anspruch 1, wobei das Minderungskriterium beliebige der Folgenden beinhaltet:
Empfangen einer positiven Anzeige eines erfolgreichen Decodierens einer vorbestimmten Anzahl von aufeinanderfolgenden Differenz-Frames; und
eine Mindestzeitdauer für den Betrieb im sicheren Modus.

12. System (300) zum Codieren eines Signals, Folgendes umfassend:
einen oder mehrere Prozessoren (302); und
einen Speicher (304), der Befehle enthält, die bei ihrer Durchführung durch den einen oder die mehreren Prozessoren bewirken, dass der eine oder die mehreren Prozessoren das Verfahren nach einem der Ansprüche 1 bis 11 ausführen.

13. Computerlesbares Speichermedium mit darauf gespeicherten computerdurchführbaren Befehlen, die bei ihrer Durchführung durch einen Computer bewirken, dass der Computer das Verfahren nach einem der Ansprüche 1 bis 11 implementiert.

## Revendications

1. Procédé (200) de codage d'un signal comprenant :
la réception (202), au fil du temps, d'une séquence de trames d'entrée qui comprennent le signal ;
le codage (204) d'une première trame de la séquence de trames d'entrée en tant que trame pouvant être décodée de manière indépendante et l'attribution de la première trame en tant que trame de référence actuelle ;
le codage (206) de trames d'entrée reçues ultérieurement, dans la séquence de trames d'entrée, chacune en tant que trame de différence qui représente une différence entre la trame d'entrée et la trame de référence actuelle ;
la transmission (208) de la trame pouvant être décodée de manière indépendante et de chacune des trames de différence, après que chacune a été codée, à un récepteur ;
la réception (210) d'un ou plusieurs accusés de réception depuis le récepteur ;
le passage à un mode de fonctionnement sans échec lorsqu'un ou plusieurs accusés de réception indiquent qu'une de la trame pouvant être décodée de manière indépendante ou des trames de différence a été décodée sans succès, et, en mode de fonctionnement sans échec, l'attribution (212) d'une trame d'entrée correspondant à une trame de différence associée à un accusé de réception reçu, des un ou plusieurs accusés de réception, qui comprend une indication positive du décodage réussi de ladite trame d'entrée en tant que trame de référence actuelle ; et
le passage à un mode de fonctionnement normal lorsqu'un critère de réduction est satisfait, et, en mode normal, l'attribution (212) d'une trame d'entrée en tant que trame de référence actuelle indépendamment de la réception d'un accusé de réception associé à une trame de différence correspondant à la trame d'entrée ;
dans lequel les un ou plusieurs accusés de réception sont reçus à travers une signalisation dans la bande ou hors bande.

2. Procédé (200) de codage d'un signal selon la revendication 1, dans lequel le signal comporte un flux vidéo.

3. Procédé (200) de codage d'un signal selon la revendication 1, dans lequel le récepteur décode chaque trame de différence à l'aide d'une trame préalablement décodée par le récepteur qui correspond à la trame de référence actuelle à partir de laquelle la trame de différence a été dérivée sans citer aucune trame interposée dans la séquence de trames entre la trame de référence actuelle et la trame de différence.

4. Procédé (200) de codage d'un signal selon la revendication 1, dans lequel chacun des un ou plusieurs accusés de réception est associé à une ou plusieurs trames de différence qui sont chacune marquées en tant qu'accusé de réception demandé.

5. Procédé (200) de codage d'un signal selon la revendication 4, dans lequel chaque trame de différence N est marquée en tant qu'accusé de réception demandé avant d'être transmise et où N est une valeur prédéterminée.

6. Procédé (200) de codage d'un signal selon la revendication 4, dans lequel la marque d'accusé de réception demandée pour chacune des une ou plusieurs trames de différence est envoyée dans la bande à l'aide des mécanismes comportant l'un quelconque des éléments suivants : conformément à une syntaxe de codec vidéo utilisée pour le codage des trames d'entrée, conformément à un message d'informations d'amélioration supplémentaires (SEI) UIT-T, et l'utilisation d'un mécanisme d'extension de données utilisateur.

7. Procédé (200) de codage d'un signal selon la revendication 4, dans lequel la marque d'accusé de réception demandée pour chacune des une ou plusieurs trames de différence est envoyée hors bande à l'aide des mécanismes comportant l'un quelconque de : un ensemble de métadonnées MPEG vertes du Groupe d'experts pour le codage d'images animées (MPEG), un mécanisme RTCweb IETF et un message de protocole d'ouverture de session (SIP) IETF.

8. Procédé (200) de codage d'un signal selon la revendication 1, dans lequel la trame pouvant être décodée de manière indépendante et chaque trame de différence sont codées conformément à une norme de compression vidéo H.264 de l'ITU-T Video Coding Experts Group.

9. Procédé (200) de codage d'un signal selon la revendication 1, dans lequel les un ou plusieurs accusés de réception sont reçus dans la bande à l'aide des mécanismes conformément à : une syntaxe de codec vidéo, un message d'informations d'amélioration supplémentaire (SEI) ITU-T ou un mécanisme d'extension de données utilisateur.

10. Procédé (200) de codage d'un signal selon la revendication 1, dans lequel les un ou plusieurs accusés de réception sont reçus hors bande à l'aide des mécanismes comportant l'un quelconque de : un mécanisme RTCweb IETF, un message de contrôle de codec IETF, un message AVPF IETF, un ensemble de métadonnées MPEG vertes du Groupe d'experts pour le codage d'images animées (MPEG), un message de contrôle de codec IETF et un message de protocole d'ouverture de session (SIP) IETF.

11. Procédé (200) de codage d'un signal selon la revendication 1, dans lequel le critère de réduction comporte l'un quelconque de :
la réception d'une indication positive d'un décodage réussi d'un nombre prédéterminé de trames de différence successives ; et une durée minimale de fonctionnement en mode sans échec.

12. Système (300) de codage d'un signal comprenant :
un ou plusieurs processeurs (302) ; et
une mémoire (304) contenant des instructions qui, lorsqu'elles sont exécutées par les un ou plusieurs processeurs, amènent les un ou plusieurs processeurs à exécuter le procédé selon l'une quelconque des revendications 1 à 11.

13. Support de stockage lisible par ordinateur sur lequel sont stockées des instructions exécutables par ordinateur qui, lorsqu'elles sont exécutées par un ordinateur, amènent l'ordinateur à mettre en œuvre le procédé selon l'une quelconque des revendications 1 à 11.
